# EUROPEAN PATENT SPECIFICATION

(11) **EP 2 355 594 B1**
(45) Date of publication and mention of the grant of the patent: **03.10.2012**
(21) Application number: 10360007.8
(22) Date of filing: 28.01.2010
(51) Int. Cl.: H04W 52/02

(54) **Controlling small cell base stations**
Steuerung von Stationen auf Basis kleiner Zellen
Contrôle de petites stations de base de cellules

(43) Date of publication of application: 10.08.2011
(73) Proprietor: Alcatel Lucent, 75007 Paris (FR)
(72) Inventor: Boccardi, Federico, Swindon Wiltshire SN1 2EE (GB); Ashraf, Imran, Swindon, SN5 5AA (GB)
(74) Representative: Sarup, David Alexander

(56) References cited:
- EP-A1- 2 056 628
- WO-A2-2009/095576
- SUJUAN FENG ET AL: "Self-Organizing Networks (SON) in 3GPP Long Term Evolution" INTERNET CITATION 20 May 2008 (2008-05-20), pages 1-15, XP002526917 [retrieved on 2009-05-05]
- MITSUBISHI ELECTRIC: "Dynamic Setup of HNBs for Energy Savings and Interference Reduction" 3GPP DRAFT; R3-081949 (DYNAMIC SETUP HNBS), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Jeju Island; 20080813, 13 August 2008 (2008-08-13), XP050165010 [retrieved on 2008-08-13]
- ALCATEL-LUCENT: "Capacity and Coverage SON Use case" 3GPP DRAFT; R3-080082_SONCAPA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Sorrento, Italy; 20080205, 5 February 2008 (2008-02-05), XP050163314 [retrieved on 2008-02-05]

## Description

### FIELD OF THE INVENTION

The present invention relates to a network node, a small cell base station and methods.

### BACKGROUND

Wireless telecommunications networks are known. In a cellular system, radio coverage is provided by areas known as cells. A base station is located in each cell to provide the radio coverage. Traditional base stations provide coverage in relatively large geographical areas and the cells are often referred to as macro cells. It is possible to provide smaller sized cells within in the a macro cell. Such smaller sized cells are sometimes refereed to as micro cells, femto cells and pico cells. One way to establish such a small cell is to provide a small cell base station that provides coverage having a relatively limited range, typically within he coverage area of a larger cell. The transmission power of a small cell base station is relatively low and, hence, each small cell provides a small coverage area compared to that of a macro cell and covers, for example, an office or a home.

Small cell base stations are typically intended primarily for users belonging to a particular home or office. Accordingly, small cell base stations may be private access or may be public access. In a small cell base station that private access, access is restricted only to registered users, for example family members or particular groups of employees. In small base stations that are public access, other users may use the small cell base station, subject to certain restrictions to protect the quality of service received by preferred users.

Such small cells are typically provided where the communications coverage provided by the macro cell is poor or where a user wishes to use an alternative communications link providing locally, by the small cell base station, to communicate with the core network. Such a situation might arise where, for example, a user has a pre-existing communications link and the user wishes to use that link in preference to that provided by a macro cell network provider to communicate with the core network.

In a typical small cell base station, a broadband Internet protocol connection is used as "backhaul" for connecting to the core network. One type of broadband Internet protocol connection is a digital subscriber line "DSL". The DSL connects a DSL transmitter-receiver "transceiver" of the small base station to the core network. The DSL allows voice calls and other services provided via the small cell base station to be supported. The small cell base station also includes a radio frequency "RF" transceiver connected to one or more antennas for wireless communications with the user equipment.

EP 2 056 628 A1 discloses a communication network element for a communication network having cells comprising a generation unit adapted to generate a switching signal based on a communication load in a cell of the communication network, wherein the switching signal is adapted to switch an activity state. In a pico sniffing embodiment, the base stations of the pico cells, when in an inactive state, support active searching of its pico cell for new active mobile communication devices. When a mobile communication device is switched on, a connection is established with a macro base station and the pico base station detects the active mobile communication device and informs the macro base station or essential network entity. When both of these indications are received, the pico base station receives a signal to go active. In another embodiment, no pico sniffing is provided. Instead, pico base stations are inactive and when a mobile communication device goes active it connects to the macro cell base station. When a threshold of the macro cell base station is exceeded an activation signal is sent to the pico base station which then goes active.

Although the deployment of such small cell base stations improves the coverage provided to user equipment, this is at the cost of needing to deploy such small cell base stations and their associated overheads. Accordingly, it is desired to provide an improved technique for controlling small cell base stations.

### SUMMARY

According to a first aspect there is provided, a method of controlling small cell base stations, as claimed in claim 1.

The first aspect recognises that due to their expected large-scale deployment in the future, the energy consumption and environmental sustainability of small cell base stations will become a growing issue. In particular, as the number of such small cell base stations are deployed, the amount of energy required to power those small cell base stations will increase dramatically. Accordingly, the first aspect recognises that in order to curtail the energy used by small cell base stations, efficient methods are required that can reduce their energy consumption as a function of user load without sacrificing their benefits and functionalities. In particular, the first aspect addresses energy management problems by providing a core network controlled idle mode procedure in the small cell base stations. The procedure allows the small cell base station pilot transmissions and associated processing to be switched off completely at all times when the small cell base station does not need to support an active call. This significantly reduces the small cell base station's energy consumption. In addition, it considerably reduces electromagnetic emissions, incidences of capturing undesired users and interference to neighbouring cells caused by continuous pilot transmissions.

Accordingly, the presence of an active user within an overlying cell, such as, for example, a macro cell, is identified. The set of small base stations which are provided within that overlying cell is then determined. A wake-up message is then provided to that set of base stations to activate those base stations by causing them to transition to a non-sleeping state. Hence, it can be seen that any small cell base stations which are in a sleeping state can remain in that sleeping state until an active user within the overlying cell containing the small cell base stations is identified. When active user equipment is identified (i.e. the user equipment is in the "sync" or "active" mode) only those small cell base stations within the macro cell containing the user equipment need to be switched from a sleeping or low-energy state. In other words, by default, the small cell base stations switch to a low energy consumption state when the user equipment within the overlying cell is not active. It will be appreciated that this approach enables the small cell base stations to transition to a non-sleeping state without any active detection of user equipment being required by the small cell base stations which enables more functionality of the small cell base station to be powered down when in the sleeping state. Instead, the identification of the active user equipment is detected by the network and communicated to the small cell base stations. When in the sniffing state, the power consumed by the small cell base station will be typically much less than would normally be the case. For example, in this state the radio transceiver, pilot transmissions and base band processing hardware may be switched off, with only the sniffing logic (which consumes significantly less power) being activated. Typically, the hardware components that are required to keep the base station's connection with the core network active are kept on. Similarly, the backhaul connection is kept active. The sniffing logic will typically detect a presence of user equipment in its locality based on detection of a rise in the received power on the uplink frequency band caused by the nearby active user equipment. Typically, if this noise rise exceeds a pre-determine threshold, the detected user equipment is deemed to be close enough to be potentially covered by the small cell base station.

In one embodiment, the set of small cell base stations comprise small cell base stations provided within the overlying cell which are associated with the active user equipment. Accordingly, as well as only identifying the small cell base stations within the overlying cell containing the active user equipment, the set of small cell base stations which need to be activated is further reduced by determining which of the small cell base stations within the overlying cell are associated with the user equipment. For example, only those small cell base stations with which the active user equipment is registered may be considered to be associated with that user equipment. It will be appreciated that this will help to further significantly reduce the number of small cell base stations within the overlying cell which need to be activated, which further helps to reduce power consumption.

In one embodiment, the at least one non-sleeping state comprises a ready state and the wake-up message comprises a second indication which causes each small cell base station to transition to the ready state in which each base station activates transmission logic operable to support wireless communication with user equipment. Accordingly, another non-sleeping state may comprise a ready state in which the small cell base station is fully activated and able to support wireless communications with the active user equipment. Preferably, all hardware components in the small cell base station may be fully switched on, although the sniffer logic may not be required and may be therefore deactivated. In particular, the small cell base station's air interface and pilot transmissions may be fully activated in the ready state. Hence, the receipt of the wake-up message may cause the base station to transition to this ready state in order to be able to support communication with the user equipment.

In one embodiment, the method comprises the steps of: determining which of the sniffing state and the ready state to cause each small cell base station to transition to the step of determining comprises: determining a second set of small cell base stations within the set of small cell base stations which are in a state which differs to the determined state and the step of transmitting comprises: transmitting the wake-up message to the second set of small base stations to cause each small cell base station to transition to that state. Accordingly, a determination may be made of which of the non-sleeping states each small cell base station is to transition to. A determination of the current state of each of those more cell base stations may also be made, typically by reference to a table storing that information. Wake-up messages then only need to be sent to the base stations which are not in the desired state in order to cause them to transition to that state. It will be appreciated that this can significantly reduce the amount of messaging which needs to be sent fo the small cell base stations.

In one embodiment, the sleeping state comprises a state in which the transmission logic and the sniffing logic are unpowered.

In one embodiment, the method comprises the step of providing an indication to at least one of the small cell base stations to cause the at least one base station to transition to the sleeping state.

According to a second aspect, there is provided a network node as claimed in claim 5.

In one embodiment, the set of small cell base stations comprise small cell base stations provided within the overlying cell which are associated with the active user equipment.

In one embodiment, the at least one non-sleeping state comprises a ready state and the wake-up message comprises a second indication which causes each small cell base station to transition to the ready state in which each base station activates transmission logic operable to support wireless communication with user equipment.

In one embodiment, the determining logic is operable to determine which of the sniffing state and the ready state to cause each small cell base station to transition to, the determining logic is operable to determine a second set of small cell base stations within the set of small cell base stations which are in a state which differs to the determined state and the logic is operable to transmit the wake-up message to the second set of small base stations to cause each small cell base station to transition to that state.

In one embodiment, the sleeping state comprises a state in which the transmission logic and the sniffing logic are unpowered.

In one embodiment, the determination logic is operable to provide an indication to at least one of the small cell base stations to cause the at least one base station to transition to the sleeping state.

According to a third aspect, there is provided a small cell base station as claimed in claim 6.

Accordingly, user equipment detection logic may be provided which may detect the presence of active user equipment. When no active user equipment is detected, the state control logic may cause a transition to a sleeping state. Should a wake-up message be received, then the state control logic may cause a transition to a non-sleeping state. Accordingly, it can be seen that when no user equipment is present, the small cell base station may default to the sleeping mode in order to reduce its power consumption. By only switching to the sleeping mode when no user equipment is present ensures that the service provided to the user equipment is maintained. By then relying on a wake-up message to cause the small cell base station to transition from the sleep mode enables most of the functionality of the base station to be powered down, thereby conserving energy. When in the sniffing state, the sniffing logic is powered to detect the presence of active user equipment.

In one embodiment, the state control logic is operable to transition to the sleeping state in an absence of an indication from the user equipment detection logic of the presence of active user equipment for a first predetermined period. Accordingly, rather than transitioning to the sleeping mode immediately when user equipment is no longer detected, the small cell base station may wait a period of time to ensure that the absence of the active user equipment is not due to some transient event which, once over, would otherwise mean that the previously connected user equipment would not be able to reconnect with the small cell base station without a wake-up message being transmitted to that base station following a detection of the user equipment within the overlying cell.

In one embodiment, the state control logic is operable to transition from the sniffing state to the sleeping state in an absence of an indication from the sniffing logic of the presence of active user equipment in the vicinity of the small cell base station for a second predetermined period. Accordingly, should the sniffing logic not detect any user equipment for a particular period of time, the small cell base station will transition back to the sleeping state in order to conserve power.

In one embodiment, the user equipment detection logic comprises communications logic operable to support wireless communications with user equipment and one non-sleeping state comprises a ready state in which the communications logic is powered. Accordingly, when in the ready state, all functionality of the small cell base station (with perhaps the exception of the sniffing logic which may not be required) is activated and the small cell base station will function normally.

In one embodiment, the state control logic is operable to transition from the sniffing state to the ready state in response to an indication from the sniffing logic of the presence of active user equipment in the vicinity of the small cell base station. Accordingly, when the sniffing logic detects the presence of user equipment, the small cell base station may transition to the ready mode to enable that detected user equipment to be fully supported.

In one embodiment, the state control logic is operable to transition from the ready state to one of the sleeping state and the sniffing state in an absence of an indication from the communications logic of communications with active user equipment for a third predetermined period. Accordingly, when the small cell base station no longer supports any active user equipment, the small cell base station may transition either directly back to the sleep mode or to the sniffing mode.

In one embodiment, the state control logic is operable to cause an indication to be provided to a core network representative of each state transition.

According to a fourth aspect, there is provided a small cell base station method as claimed in claim 13.

In one embodiment, the step of transitioning comprises transition to the sleeping state in an absence of an indication from the user equipment detection logic of the presence of active user equipment for a first predetermined period.

In one embodiment, the step of transitioning comprises transitioning from the sniffing state to the sleeping state in an absence of an indication of the presence of active user equipment in the vicinity of the small cell base station for a second predetermined period.

In one embodiment, the one non-sleeping state comprises a ready state in which communications logic is powered.

In one embodiment, the step of transitioning comprises transition from the sniffing state to the ready state in response to an indication of the presence of active user equipment in the vicinity of the small cell base station.

In one embodiment, the step of transitioning comprises transitioning from the ready state to one of the sleeping state and the sniffing state in an absence of an indication from the communications logic of communications with active user equipment for a third predetermined period.

In one embodiment, the sleeping state comprises a state in which the transmission logic and the sniffing logic are unpowered.

In one embodiment, the method comprises the step of causing an indication to be provided to a core network representative of each state transition.

Further particular and preferred aspects are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying drawings, in which:
Figure 1 illustrates the main components of a telecommunications network according to one embodiment;
Figure 2 illustrates the main processing steps undertaken by the MME according to one embodiment;
Figure 3 illustrates the main processing steps performed by the small cell base station;
Figure 4 illustrates the main components of the small cell bas station;
Figure 5 is a state diagram showing the operative states of the smell cell base station; and
Figure 6 illustrates the sniffing technique.

### DESCRIPTION OF THE EMBODIMENTS

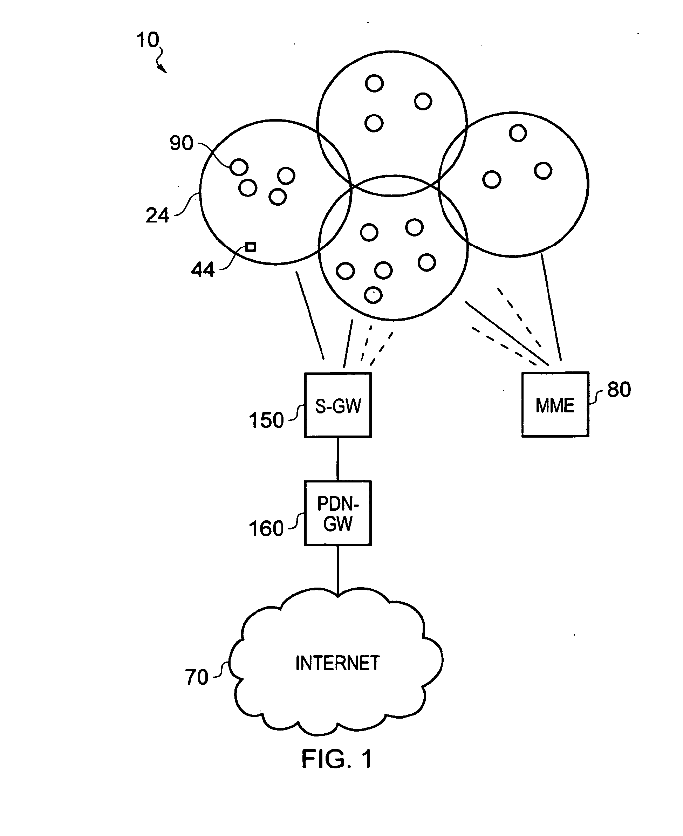

Figure 1 illustrates a wireless communication network, generally 10, according to one embodiment. User equipment 44 roam through the wireless communication network 10. Base stations are provided which support respective macro cells 24. A number of such base stations are provided, which are distributed geographically in order to provide a wide area of coverage to the user equipment 44. When user equipment 44 is within a macro cell 24 supported by the base station then communications may be established between the user equipment 44 and the base station over an associated radio link. Each base station typically supports a number of sectors. Typically, a different antenna within a base station supports an associated sector. Accordingly, each base station has multiple antennas and signals sent through the different antennas are electronically weighted to provide a sectorised approach. Of course, it will be appreciated that Figure 1 illustrates a small subset of the total number of user equipment and base stations that may be present in a typical communications system.

The wireless communication network 10 is managed by core network nodes. In this long term evolution (LTE) example, a serving gateway S-GW 150, a Packet Data Network Gateway PDN-GW 160 are coupled with the Internet 70 and provide data to and from base stations within the network. A Mobility Management Entity MME 80 provides a control path with the base stations within the network.

The MME 80 maintains a neighbour list which includes information about the geographical relationship between cells supported by base stations. In addition, the MME 80 maintains location information which provides information on the location of the user equipment within the wireless communications network 10.

Small cell base stations are provided, each of which provides a small cell 90 in the vicinity of a building within which the associated small cell base station is installed. The small cells 90 provide local communications coverage for a user in the vicinity of those buildings. A handover or camping event is initiated between a base station and a small cell base station when the user equipment provides a measurement report to the macro base station which indicates that the small cell base station is within range. The small cell base stations typically utilise the user's broadband Internet connection (such as ADSL, Cable, Ethernet, etc.) as a backhaul.

Small cell base stations are lower-power, lower-cost, and possibly user-deployed base stations that provide a high cellular quality of service in residential or enterprise environment. In contrast to current macro cell approaches where complex and highly reliable base stations are deployed to strategic locations decided by the network owner, the small cell base stations are provided locally by customers. Such small cell base stations provide local coverage in areas of the macro network where quality of service may be low. Hence, the small cell base stations provide for improved quality of service in areas which are difficult for network operators. To reduce the cost of the small cell stations and to reduce complexity and interference effects of the small cell on other user equipment within the macro cell, the transmission power of the small cell base station is relatively low in order to restrict the size of the small cell to a range of tens of metres or less. The small cell base stations have extensive auto-configuration and self-optimisation capability to enable a simple plug-and-play deployment. As such, they are designed to automatically integrate themselves into an existing macro cellular wireless network 10. In addition, some access point within the macro cellular network contains some functionality traditionally provided by the core network.

The small cell base stations are operational in two different modes. In the first, open access mode, a small cell base station allows access to all the users of the operator's network. In the second, a closed access mode, only registered users are able to access the small cell.

In overview, the operation of the present technique is as follows. Each small cell base station operates in one of three different states. These states are a sleeping state (which is the default state of the small cell base station in order to conserve maximum energy and in which only that hardware required to receive a message over the IP backhaul is powered), a sniffing state (in which those hardware components necessary to detect the presence of user equipment within the range of the small cell base station and the synchronisation hardware necessary to maintain RF synchronisation with the network is active) and a ready state (in which the small cell base station is fully functional and consuming the most power). The small cell base station will default to the sleeping state when no user equipment is detected. The small cell base station when in the sleeping state need not power any user-related hardware at all since it does not rely on the detection of user equipment to switch out of this state, but rather relies on a signal provided by the core network when the core network detects that a user may need to be supported by that small cell base station. The core network determines which small cell base stations to switch out of the sleeping mode on an overlying cell-by-overlying cell basis. That is to say, when the core network detects that a user is present within an overlying cell, it will instruct those small cell base stations within that overlying cell to switch out of the sleeping mode. For those small cell base stations that operate in the closed access mode, the small cell base stations which are not associated with that user (i.e. the user is not registered at the small cell base station) may be left in the sleeping state. It will be appreciated that this approach considerably reduces the energy consumption of small cell base stations and reduces unnecessary signalling and rejected handovers since only the appropriate small cell base stations for that user will be switched from the sleeping state.

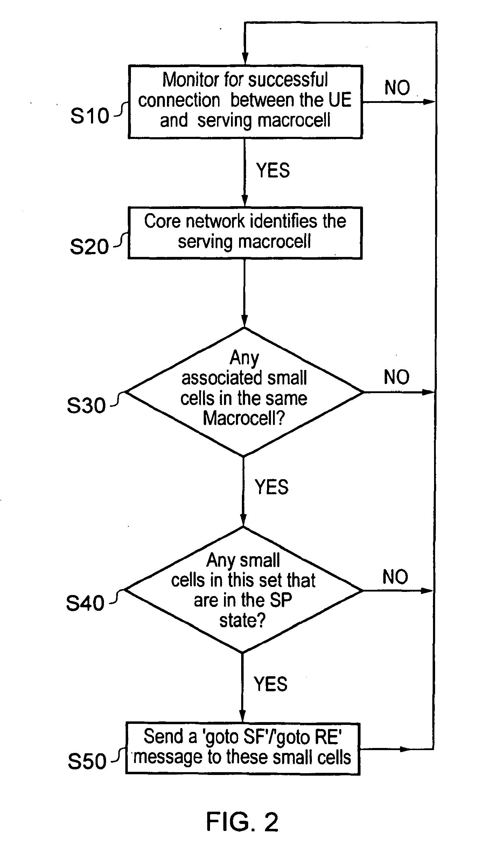

Figure 2 illustrates the main processing steps undertaken by the MME 80 according to one embodiment. At step S10, the MME 80 determines whether a successful connection has been made between a user equipment 44 and a serving overlying cell, such as the macro cell 24. For example, a connection is determined to made between the user equipment 44 and a camped-on macro cell after a paging message is transmitted to the user equipment 44 on the downlink, or an uplink connection request from the user equipment 44 is made to the macro base station.

Once a successful connection has been made then processing proceeds to step S20 where the core network identifies the serving macro cell. Accordingly, the specific macro cell within which the user equipment is located is thereby identified.

Thereafter, at step S30, the MME 80 determines whether there are any associated small cell base stations within that macro cell. The associated small cell base stations will be any closed access small cell base stations with which that user equipment is registered, together with, optionally, every open access small cell base station. This determination is made from information stored in the core network relating to the small cell base stations, their location and user registrations. For example, each small cell base station may on initialisation identify the macro base stations it is able to detect and provide details of any registered user equipment when operating in the closed access mode.

If no small cells are identified, meaning that there are no small cell base stations within that macro cell which are either open access or which are closed access and the user equipment is registered with those closed access small cell base stations, then no changes are made and any small cell base stations stay in their current state. However, if any open access small cell base stations or closed access small cell base stations for which the user equipment is registered are identified within the macro cell, then processing proceeds to step S40.

At step S40, a determination is made of whether any of those small cell base stations identified above are currently in the sleeping mode. The core network will receive signalling messages from each small cell base station as it transitions between its states and will maintain a look-up table storing this information. From this look-up table it is possible to determine whether any of the small cell base stations identified above need to signalled to transition out of the sleeping state. If none of those base stations are in the sleeping state, then processing returns to step S10. If those base stations are in the sleeping state, then processing proceeds to step S50.

At step S50, a message is transmitted to the relevant small cell base stations to cause them to transition from the sleeping state. This message may instruct the small cell base stations to transition to either the sniffing or the ready state, depending on the particular deployment utilised.

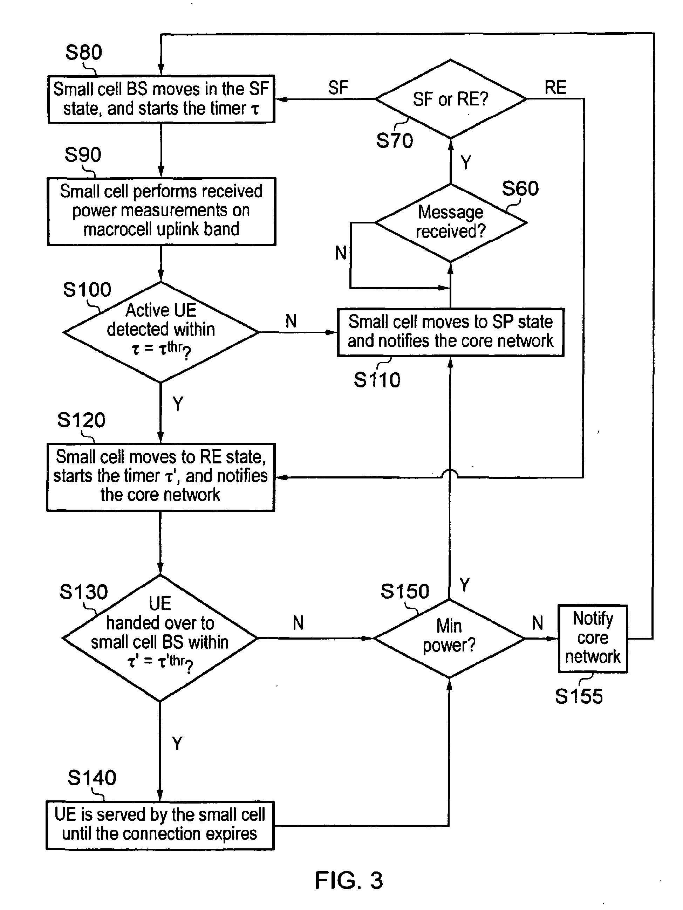

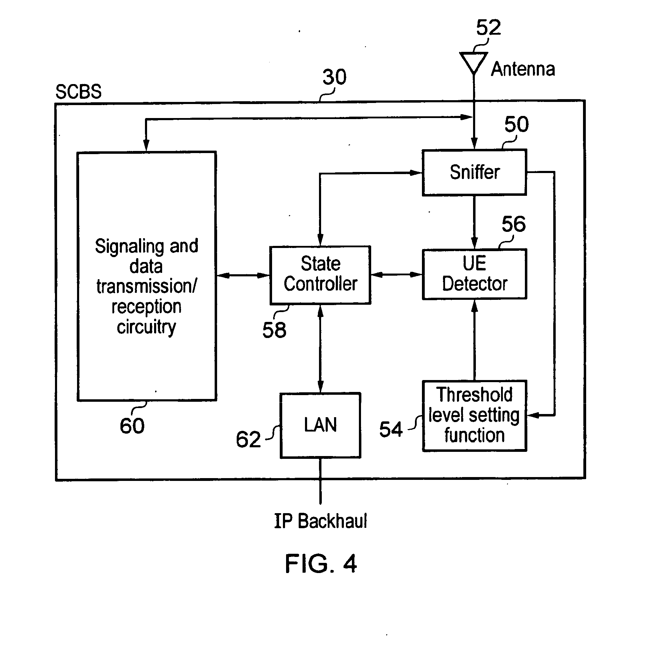

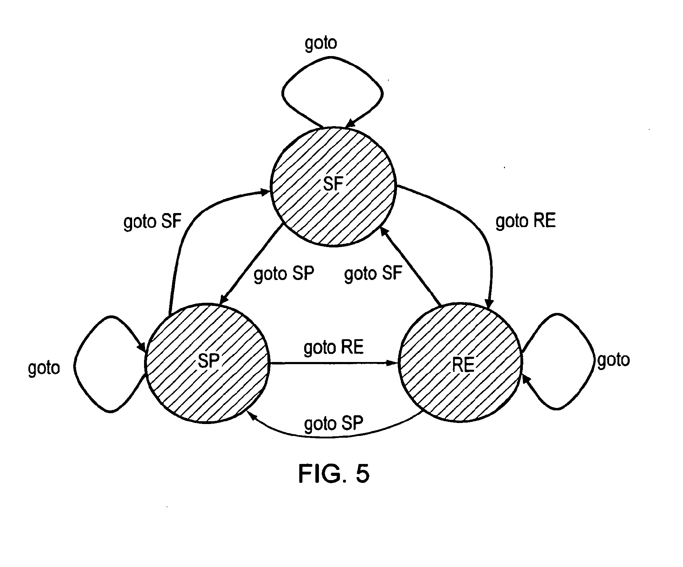

Figure 3 illustrates the main processing steps performed by the small cell base station shown in Figure 4 when transitioning between the states shown in Figure 5. It is assumed that the small cell base station has defaulted to the sleeping state in which all hardware components in the small cell base station are switched off, except for the wake-on-LAN circuit element 62 which is used to switch on the small cell base station upon receiving a wake-up control message from the core network via the backhaul.

All hardware components are switched off, and when in this state, the hardware boot-up time is in the order of seconds or minutes. However, the energy consumption when in this state is minimal, with the wake-on-LAN circuit element 62 being the only power-consuming element.

Accordingly, at step S60, the wake-on-LAN circuit element 62 waits for a wake-up message to be received. Once a wake-up message is received, processing then proceeds to step S70.

At step S70, a determination is made of whether the received wake-up message is instructing the small cell base station to transition to the sniffing state or to the ready state. If the wake up message instructs the small cell base station to transition to the ready state, then processing proceeds to step S120, as will be explained in more detail below. If the wake up message instructs the small cell base station to transition to the sniffing state, then processing proceeds to step S80.

At step S80, the small cell base station, under the control of the state controller 58 transitions to the sniffing state and starts a timer. The state controller 58 then activates sniffer 50, the UE detector 56 and the threshold level for setting function 54 and processing proceeds to step S90.

As mentioned above, when in this sniffing state, radio transceiver and processing hardware is switched off, and is replaced with the low power sniffer 50, UE detector 56 and threshold level setting function 54. The hardware components that are required to keep the base station's connection alive with the core network are also kept on. The backhaul connection is kept alive to maintain RF synchronisation and the restrict boot up time to the order of a few milliseconds. The small cell base station's pilot transmissions and base band processing are switched off. Dependent on hardware design, these small cell base stations energy consumption in this state would typically be 60% of the state when it is fully active.

At step S90, the small cell base station then performs received power measurements on the macro cell band. In particular, the sniffer 50 is a detector operable to measure power in the uplink frequency band of the macro cell. Usually this is at a low level which, from the perspective of the small cell base station, is considered merely background noise. When user equipment in the vicinity of the small cell base station makes a call to the macro cell, the sniffer 50 detects a rise in that noise power level due to power received from the user equipment received in that band. If, within a predetermined amount of time, it is determined in the user equipment detector 56 that this higher noise level detected by the small cell base station is above a predetermined threshold at which the user equipment is close enough to the small cell base station to be likely covered by the small cell, then the detector informs the state controller 58 and processing proceeds to step S120, as will described in more detail below. If no user equipment is detected within that time period, then the state controller 58 deactivates the sniffer 50, the UE detector 56 and the threshold setting function 54 and reverts to the sleeping mode. It will be appreciated that the state controller 58 transmits, using the wake-on-LAN circuit 62, a status message to the core network each time a change in state occurs.

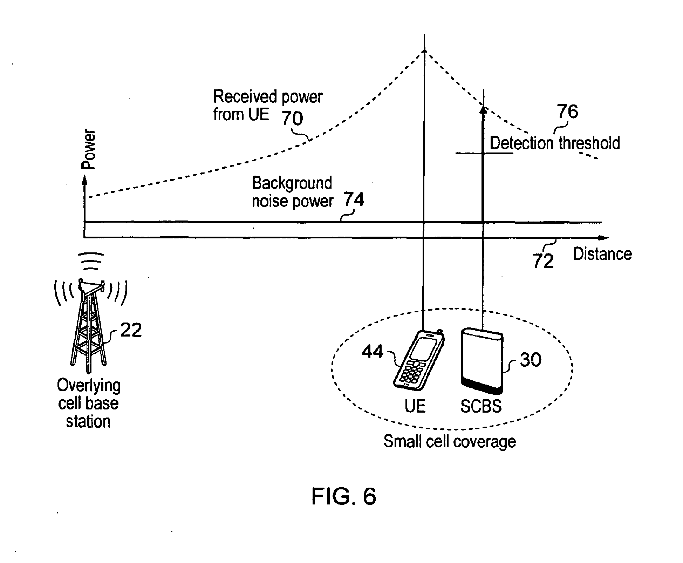

The sniffing is further illustrated in Figure 6, where the power level 70 received from user equipment as a function of distance 72 from he user equipment is shown graphically, as is usual background noise level 74. The small cell base station detects as noise a combined signal of the power received from the user equipment plus the background noise level.

A threshold is set for which, if the received power exceeds that threshold, then the user equipment is taken to be within the small cell coverage area. This is the detection threshold 76 as shown in Figure 7. This threshold is set automatically by the threshold level setting function 54 user equipment at the edge of the small cell coverage area causes the combined signal received by the small cell base station to just exceed the threshold and so can be identified as being within the small cell coverage area. This threshold 76 is set automatically based on an estimate of radio signal attenuation (also known as path loss) that would be experienced by signals between user equipment and the small cell base station. A first estimate of this is made by measuring attenuation experienced by signals from the macro base station 22 to the small cell base station, and the assuming this attenuation would also be experienced by the user equipment within the small cell, the small cell being small in size compared to the macro cell. Specifically, attenuation of downlink pilot signals from the macro cell is measured by the small cell base station 30 by the sniffer 50.

Subsequently, this attenuation estimate is improved during operation by performing measurements of attenuation from the macro cell base station to various user equipment. These are reported in measurement reports from the user equipment to the small cell base station.

The threshold 76 is set and subsequently adjusted based on these reported measurements by calculating, by using the attenuation estimate, user terminal transmission power for communicating with the macro cell base station when the user equipment in the active mode is located at the small cell edge; and then calculating the level of this signal that would received at the small cell base station using an estimate of the signal attenuation between the user equipment and the small cell base station. Specifically, the estimate of signal attenuation between the small cell base station the user equipment is calculated as follows. Using the distance between the small cell base station and the small cell edge (which is where the user equipment is located) and the attenuation estimate, attenuation per unit distance is calculated. Using the attenuation per unit distance and the distance between the small cell base station and the user equipment at the small cell edge, the attenuation between the small cell base station and the user equipment is calculated. From the user equipment transmission power and this calculated attenuation from the small cell base station to the user equipment, the threshold level 76 is arrived at.

Upon user equipment in the active mode, in other words a call or session connected mode, entering the small cell coverage area, the detector 56 identifies that user equipment has entered the cell coverage area provided the power received exceeds the threshold for more that a predefined time.

At step S120, the small cell base station transitions to the ready state, starts a timer and notifies the core network of its current state. In the ready state, all hardware components in the small cell base station are fully switched on, except for the sniffer 50 and its associated hardware. The small cell base station's air interface and pilot transmission are activated. If user equipment is handed over to the small cell base station within a predetermined period of time, then processing proceeds to step S140.

If no user equipment hands over to the small cell base station then processing proceeds to step S150.

At step S 140, the user equipment is then served by the small cell base station until the connection with that user equipment expires. Should no connection with any user equipment occur for a predetermined period of time, then processing proceeds to step S150.

At step S150, a determination is made of whether the small cell base station is configured in a minimum power consumption mode. If it is determined that the small cell base station 30 is configured to be in a minimum power consumption mode, then the state controller 50 causes the small base station to transition directly back to the sleeping state and causes the wake-on-LAN circuit 62 to send an indication to the core network at step S110. If the small cell base station is not configured to operate in a maximum energy saving mode then processing proceeds to step S80 where the state controller 58 causes the small cell base station to switch to the sniffing mode.

Accordingly, it can be seen that energy management can be improved by enabling a core network controlled idle mode procedure in small cell base stations, particularly those which operate in a closed mode. The procedure allows the small cell base station pilot transmissions and associated processing to be switched off completely for all times when the small cell base station does not need to support and active core. This significantly reduces the small cell base station's energy consumption. In addition, it considerably reduces the electromagnetic interference due to small cell base stations, the capturing of undesired users and the interference to neighbouring cells caused by continuous pilot transmissions. Unlike implementations that merely use the sniffing functionality, it is possible to distinguish between registered and unregistered users. This means that a small cell base station operating in the closed mode will have otherwise unnecessarily switched itself on by detecting a noise rise from an unregistered user in its vicinity. It will be appreciated that this situation could occur often for small cell base stations located in a busy area with many active users passing by. By causing the small cell base stations to switch to the sleeping mode when user equipment associated with the small cell base station are not active, significant power savings can be achieved. Unlike the completely distributed technique relying solely on the sniffer functionality, the transition out of the sleeping mode is not determined by the small cell base stations themselves, but rather is aided by the core network.

In other words, a key advantage is the ability of the small cell base stations to reside in the sleeping state for the majority of their inactive time. This results in substantial power saving particularly for those arrangements in which the base stations remain in the sniffing state when inactive. While this procedure requires one macro cell-small cell handover per connection, the benefits of reduced mobility events and associated signally die to the usually switched off pilot considerably outweigh this.

In arrangements which use co-channel operation of macro and small cells, if the small cell reuses the same carrier frequency as the macro cell, it may be beneficial to gradually increase pilot transmissions in the ready state (for example over a few seconds). This is to allow the macro cell sufficient time to handover the user equipment before the interference of the small cell becomes too strong and the call drops.

In those arrangements where there is no macro cell coverage to provide emergency calls, to ensure that the small cell base station provides continuous coverage and allows emergency calls in area without macro cellular coverage, the idle mode procedure should only be activated after sufficient macro cellular coverage could be confirmed by macro cell pilot measurements performed by the small cell base station connected to user equipment.

In embodiments, if the user equipment hands over successfully to a new macro cell, the core network can identify the new serving cell and perform the same procedure to wake up the associated small cell base stations within that macro cell.

Hence it can be seen that this approach significantly reduces the energy consumption of small cell base stations since it allows the main processing and pilot transmissions to be switched off for most of the time. Also, this approach should improve user acceptance of small cell base stations in the home by preventing increase electromagnetic radiation exposure through disabling pilot signally when not required. Also, this approach significantly reduces capture effects and associated signally. Finally, there is a reduction in interference to neighbouring cells by disabling the pilot transmissions for most of the time.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of controlling small cell base stations (30), comprising the steps of:
identifying (S10) a presence of an active user equipment (44) within an overlying cell (24);
determining (S30) a set of small cell base stations provided within said overlying cell;
providing (S50) a wake-up message to said set of small cell base stations within said overlying cell to cause said set of small cell base stations to transition from a sleeping state to at least one non-sleeping state, wherein said at least one non-sleeping state comprises a sniffing state and said wake-up message comprises a first indication which causes each small cell base station to transition to said sniffing state in which each base station activates sniffing logic operable to detect a presence of active user equipment in its vicinity.

2. The method of claim 1, wherein said set of small cell base stations comprise small cell base stations provided within said overlying cell which are associated with said active user equipment.

3. The method of any preceding claim, wherein said at least one non-sleeping state comprises a ready state and said wake-up message comprises a second indication which causes each small cell base station to transition to said ready state in which each base station activates transmission logic operable to support wireless communication with user equipment.

4. The method of claim 3, comprising the steps of:
determining which of said sniffing state and said ready state to cause each small cell base station to transition to, said step of determining comprises:
determining a second set of small cell base stations within said set of small cell base stations which are in a state which differs to said determined state and said step of transmitting comprises:
transmitting said wake-up message to said second set of small base stations to cause each small cell base station to transition to that state.

5. A network node (80) operable to control at least one small cell base station (30), said network node comprising:
identification logic operable to identify a presence of an active user equipment (44) within an overlying cell (24):
determining logic operable to determine a set of small cell base stations provided within said overlying cell; and
logic operable to provide a wake-up message to said set of small cell base stations within said overlying cell to cause said set of small cell base stations to transition from a sleeping state to at least one non-sleeping state, wherein the at least one non-sleeping state comprises a sniffing state and the wake-up message comprises a first indication which causes each small cell base station to transition to the sniffing state in which each base station activates sniffing logic operable to detect a presence of active user equipment in its vicinity.

6. A small cell base station (30), comprising:
user equipment detection logic (56) operable to detect a presence of active user equipment (44); and
state control logic (58) operable, in an absence of an indication from said user equipment detection logic of said presence of active user equipment, to transition to a sleeping state and operable, in response to a wake-up message, to transition from said sleeping state to at least one non-sleeping state, wherein said user equipment detection logic comprises sniffing logic (50) operable to detect a presence of active user equipment in a vicinity of said small cell base station and one non-sleeping state comprises a sniffing state in which said sniffing logic is powered.

7. The small cell base station of claim 6, wherein said state control logic is operable to transition to said sleeping state in an absence of an indication from said user equipment detection logic of said presence of active user equipment for a first predetermined period.

8. The small cell base station of claim 6, wherein said state control logic is operable to transition from said sniffing state to said sleeping state in an absence of an indication from said sniffing logic of said presence of active user equipment in said vicinity of said small cell base station for a second predetermined period.

9. The small cell base station of any one of claims 6 to 8, wherein said user equipment detection logic comprises communications logic (60) operable to support wireless communications with user equipment and one non-sleeping state comprises a ready state in which said communications logic is powered.

10. The small cell base station of claim 9, wherein said state control logic is operable to transition from said sniffing state to said ready state in response to an indication from said sniffing logic of said presence of active user equipment in said vicinity of said small cell base station.

11. The small cell base station of claim 9 or 10, wherein said state control logic is operable to transition from said ready state to one of said sleeping state and said sniffing state in an absence of an indication from said communications logic of communications with active user equipment for a third predetermined period.

12. The small cell base station of any one of claims 6 to 11, wherein said state control logic is operable to cause an indication to be provided to a core network representative of each state transition.

13. A small cell base station method, comprising the steps of:
detecting (S100) a presence of active user equipment (44); and
in an absence of an indication of said presence of active user equipment, transitioning (S110) to a sleeping state; and
in response to a wake-up message, transitioning (S80) from said sleeping state to at least one non-sleeping state, wherein the step of detecting comprises detecting a presence of active user equipment in a vicinity of the small cell base station by means of sniffing logic and the at least one non-sleeping state comprises a sniffing state in which said sniffing logic is powered.

## Patentansprüche

1. Verfahren zur Steuerung von Stationen auf Basis kleiner Zellen (30), die folgenden Schritte umfassend:
Identifizieren (S10) einer Anwesenheit eines aktiven Benutzergeräts (44) innerhalb einer darüberliegenden Zelle (24);
Ermitteln (S30) eines Satzes von innerhalb der besagten darüberliegenden Zelle bereitgestellten Stationen auf Basis kleiner Zellen;
Bereitstellen (S50) einer Aufwecknachricht an den besagten Satz von Stationen auf Basis kleiner Zellen innerhalb der besagten darüberliegenden Zelle, um zu bewirken, dass der besagte Satz von Stationen auf Basis kleiner Zellen von einem Schlafzustand in mindestens einen Nicht-Schlafzustand übergeht, wobei der besagte mindestens eine Nicht-Schlafzustand einen Sniffing-Zustand umfasst und die besagte Aufwecknachricht eine erste Angabe enthält, welche bewirkt, dass jede Station auf Basis kleiner Zellen in den besagten Sniffing-Zustand übergeht, in welchem jede Basisstation eine Sniffing-Logik aktiviert, die betreibbar ist, um eine Anwesenheit eines aktiven Benutzergeräts in ihrer Nachbarschaft zu erkennen.

2. Verfahren nach Anspruch 1, wobei der besagte Satz von Stationen auf Basis kleiner Zellen in der besagten darüberliegenden Zelle bereitgestellte Stationen auf Basis kleiner Zellen umfasst, welche mit dem besagten aktiven Benutzergerät assoziiert sind.

3. Verfahren nach einem beliebigen der vorstehenden Ansprüche, wobei der besagte mindestens eine Nicht-Schlafzustand einen Bereitschaftszustand umfasst und die besagte Aufwecknachricht eine zweite Angabe enthält, welche bewirkt, dass jede Station auf Basis kleiner Zellen in den Bereitschaftszustand übergeht, in welchem jede Basisstation eine Übertragungslogik aktiviert, die betreibbar ist, um die drahtlose Kommunikation mit dem Benutzergerät zu unterstützen.

4. Verfahren nach Anspruch 3, die folgenden Schritte umfassend:
Bestimmen, ob jede Station auf Basis kleiner Zellen in den besagten Sniffing-Zustand oder in den besagten Bereitschaftszustand übergehen soll, wobei der besagte Schritt des Bestimmens umfasst:
Bestimmen eines zweiten Satzes von Stationen auf Basis kleiner Zellen innerhalb des besagten Satzes von Stationen auf Basis kleiner Zellen, welche sich in einem Zustand befinden, der sich von dem besagten bestimmten Zustand unterscheidet, und wobei der besagte Schritt des Übertragens umfasst:
Übertragen der besagten Aufwecknachricht an den besagten zweiten Satz von Stationen auf Basis kleiner Zellen, um zu bewirken, dass jede Station auf Basis kleiner Zellen in diesen Zustand übergeht.

5. Netzwerkknoten (80), betreibbar für die Steuerung mindestens einer Station auf Basis kleiner Zellen (30), wobei der besagte Netzwerkknoten umfasst:
Eine Identifikationslogik, betreibbar für das Identifizieren einer Anwesenheit eines aktiven Benutzergeräts (44) innerhalb einer darüberliegenden Zelle (24);
eine Bestimmungslogik, betreibbar für das Bestimmen eines Satzes von innerhalb der besagten darüberliegenden Zelle bereitgestellten Stationen auf Basis kleiner Zellen; und
eine Logik, betreibbar für das Bereitstellen einer Aufwecknachricht an den besagten Satz von Stationen auf Basis kleiner Zellen innerhalb der besagten darüberliegenden Zelle, um zu bewirken, dass der besagte Satz von Stationen auf Basis kleiner Zellen von einem Schlafzustand in mindestens einen Nicht-Schlafzustand übergeht, wobei der mindestens eine Nicht-Schlafzustand einen Sniffing-Zustand umfasst und die besagte Aufwecknachricht eine erste Angabe enthält, welche bewirkt, dass jede Station auf Basis kleiner Zellen in den Sniffing-Zustand übergeht, in welchem jede Basisstation die Sniffing-Logik, die betreibbar ist, um eine Anwesenheit eines aktiven Benutzergeräts in ihrer Nachbarschaft zu erkennen, aktiviert.

6. Station auf Basis kleiner Zellen (30), umfassend:
Eine Benutzergeräterkennungslogik (56), betreibbar für das Erkennen einer Anwesenheit eines aktiven Benutzergeräts (44); und
eine Zustandssteuerungslogik (58), betreibbar, um, wenn keine Angabe von der besagten Benutzergeräterkennungslogik bezüglich der besagten Anwesenheit eines aktiven Benutzergeräts vorliegt, in einen Schlafzustand überzugehen, und betreibbar, um in Reaktion auf eine Aufwecknachricht von dem besagten Schlafzustand in mindestens einen Nicht-Schlafzustand überzugehen, wobei die besagte Benutzergeräterkennungslogik eine Sniffing-Logik (50) umfasst, welche betreibbar ist, um eine Anwesenheit eines aktiven Benutzergeräts in einer Nachbarschaft der besagten Station auf Basis kleiner Zellen zu erkennen, und wobei ein Nicht-Schlafzustand einen Sniffing-Zustand umfasst, in welchem die besagte Sniffing-Logik angetrieben wird.

7. Station auf Basis kleiner Zellen nach Anspruch 6, wobei die besagte Zustandssteuerungslogik betreibbar ist, um in den besagten Schlafzustand überzugehen, wenn keine Angabe von der besagten Benutzergeräterkennungslogik bezüglich der besagten Anwesenheit eines aktiven Benutzergeräts für einen ersten vorbestimmten Zeitraum vorliegt.

8. Station auf Basis kleiner Zellen nach Anspruch 6, wobei die besagte Zustandssteuerungslogik betreibbar ist, um von dem besagten Sniffing-Zustand in den besagten Schlafzustand überzugehen, wenn keine Angabe von der besagten Sniffing-Logik bezüglich der besagten Anwesenheit eines aktiven Benutzergeräts in der besagten Nachbarschaft der besagten Station auf Basis kleiner Zellen für einen zweiten vorbestimmten Zeitraum vorliegt.

9. Station auf Basis kleiner Zellen nach einem beliebigen der Ansprüche 6 bis 8, wobei die besagte Benutzergeräterkennungslogik eine Kommunikationslogik (60) umfasst, welche betreibbar ist, um die drahtlose Kommunikation mit dem Benutzergerät zu unterstützen, und wobei ein Nicht-Schlafzustand einen Bereitschaftszustand umfasst, in welchem die besage Kommunikationslogik angetrieben wird.

10. Station auf Basis kleiner Zellen nach Anspruch 9, wobei die besagte Zustandssteuerungslogik betreibbar ist, um in Reaktion auf eine Angabe von der besagten Sniffing-Logik bezüglich der besagten Anwesenheit eines aktiven Benutzergeräts in der besagten Nachbarschaft der besagten Station auf Basis kleiner Zellen von dem besagten Sniffing-Zustand in den besagten Bereitschaftszustand überzugehen.

11. Station auf Basis kleiner Zellen nach Anspruch 9 oder 10, wobei die besagte Zustandssteuerungslogik betreibbar ist, um von dem besagten Bereitschaftszustand entweder in den besagten Schlafzustand oder in den besagten Sniffing-Zustand überzugehen, wenn keine Angabe von der besagten Kommunikationslogik bezüglich einer Kommunikation mit einem aktiven Benutzergerät für einen dritten vorbestimmten Zeitraum vorliegt.

12. Station auf Basis kleiner Zellen nach einem beliebigen der Ansprüche 6 bis 11, wobei die besagte Zustandssteuerungslogik betreibbar ist, um zu bewirken, dass eine Angabe an ein Kernnetzwerk, welches für jeden Zustandsübergang repräsentativ ist, bereitgestellt wird.

13. Verfahren für Stationen auf Basis kleiner Zellen, die folgenden Schritte umfassend:
Erkennen (S100) einer Anwesenheit eines aktiven Benutzergeräts (44); und
wenn keine Angabe bezüglich der besagten Anwesenheit eines aktiven Benutzergeräts vorliegt, Übergehen (S110) in einen Schlafzustand; und
in Reaktion auf eine Aufwecknachricht, Übergehen (S80) von dem besagten Schlafzustand in mindestens einen Nicht-Schlafzustand, wobei der Schritt des Erkennens das Erkennen einer Anwesenheit eines aktiven Benutzergeräts in einer Nachbarschaft der Station auf Basis kleiner Zellen anhand der Sniffing-Logik umfasst, und wobei der mindestens eine Nicht-Schlafzustand einen Sniffing-Zustand umfasst, in welchem die besagte Sniffing-Logik angetrieben wird.

## Revendications

1. Procédé de commande de petites stations de base de cellules (30), comprenant les étapes suivantes :
identifier (S10) une présence d'un équipement utilisateur actif (44) à l'intérieur d'une cellule supérieure (24) ;
déterminer (S30) un ensemble de petites stations de base de cellules prévues à l'intérieur de ladite cellule supérieure ;
fournir (S50) un message de réveil audit ensemble de petites stations de base de cellules à l'intérieur de ladite cellule supérieure pour entraîner le passage dudit ensemble de petites stations de base de cellules d'un état de sommeil à au moins un état de non-sommeil, dans lequel ledit au moins un état de non-sommeil comprend un état de détection et ledit message de réveil comprend une première indication qui entraîne le passage de chaque petite station de base de cellules audit état de détection dans lequel chaque station de base active une logique de détection permettant de détecter une présence d'un équipement utilisateur actif dans son voisinage.

2. Procédé selon la revendication 1, dans lequel ledit ensemble de petites stations de base de cellules comprend de petites stations de base de cellules prévues à l'intérieur de ladite cellule supérieure qui sont associées audit équipement utilisateur actif.

3. Procédé selon l'une quelconque des revendications précédentes, dans lequel ledit au moins un état de non-sommeil comprend un état prêt et ledit message de réveil comprend une deuxième indication qui entraîne le passage de chaque petite station de base de cellules audit état prêt dans lequel chaque station de base active une logique de transmission permettant de prendre en charge une communication sans fil avec un équipement utilisateur.

4. Procédé selon la revendication 3, comprenant les étapes suivantes :
déterminer dans quel état parmi l'état de détection et l'état prêt chaque petite station de base de cellules est entraînée à passer, ladite étape de détermination comprend :
la détermination d'un deuxième ensemble de petites stations de base de cellules à l'intérieur dudit ensemble de petites stations de base de cellules qui sont dans un état qui diffère dudit état déterminé et ladite étape de transmission comprend :
la transmission dudit message de réveil audit deuxième ensemble de petites stations de base pour entraîner le passage de chaque petite station de base de cellules à cet état.

5. Noeud de réseau (80) permettant de commander au moins une petite station de base de cellules (30), ledit noeud de réseau comprenant :
une logique d'identification permettant d'identifier une présence d'un équipement utilisateur actif (44) à l'intérieur d'une cellule supérieure (24) ;
une logique de détermination permettant de déterminer un ensemble de petites stations de base de cellules prévues à l'intérieur de ladite cellule supérieure ; et
une logique permettant de fournir un message de réveil audit ensemble de petites stations de base de cellules à l'intérieur de ladite cellule supérieure pour entraîner le passage dudit ensemble de petites stations de base de cellules d'un état de sommeil à au moins un état de non-sommeil, dans lequel l'au moins un état de non-sommeil comprend un état de détection et le message de réveil comprend une première indication qui entraîne le passage de chaque petite station de base de cellules à l'état de détection dans lequel chaque station de base active une logique de détection permettant de détecter une présence d'un équipement utilisateur actif dans son voisinage.

6. Petite station de base de cellules (30), comprenant :
une logique de détection d'équipement utilisateur (56) permettant de détecter une présence d'un équipement utilisateur actif (44) ; et
une logique de commande d'état (58) permettant, en l'absence d'une indication provenant de ladite logique de détection d'équipement utilisateur de ladite présence d'un équipement utilisateur actif, de passer à un état de sommeil et permettant, en réponse à un message de réveil, de passer dudit état de sommeil à au moins un état de non-sommeil, dans laquelle ladite logique de détection d'équipement utilisateur comprend une logique de détection (50) permettant de détecter une présence d'équipement utilisateur actif dans un voisinage de ladite petite station de base de cellules et un état de non-sommeil comprend un état de détection dans lequel ladite logique de détection est alimentée.

7. Petite station de base de cellules selon la revendication 6, dans laquelle ladite logique de commande d'état permet de passer audit état de sommeil en l'absence d'une indication provenant de ladite logique de détection d'équipement utilisateur de ladite présence d'un équipement utilisateur actif pendant une première période prédéterminée.

8. Petite station de base de cellules selon la revendication 6, dans laquelle ladite logique de commande d'état permet de passer dudit état de détection audit état de sommeil en l'absence d'une indication provenant de ladite logique de détection de ladite présence d'un équipement utilisateur actif dans ledit voisinage de ladite petite station de base de cellules pendant une deuxième période prédéterminée.

9. Petite station de base de cellules selon l'une quelconque des revendications 6 à 8, dans laquelle ladite logique de détection d'équipement utilisateur comprend une logique de communications (60) permettant de prendre en charge des communications sans fil avec un équipement utilisateur et un état de non-sommeil comprend un état prêt dans lequel ladite logique de communications est alimentée.

10. Petite station de base de cellules selon la revendication 9, dans laquelle ladite logique de commande d'état permet de passer dudit état de détection audit état prêt en réponse à une indication provenant de ladite logique de détection de ladite présence d'un équipement utilisateur actif dans ledit voisinage de ladite petite station de base de cellules.

11. Petite station de base de cellules selon la revendication 9 ou 10, dans laquelle ladite logique de commande d'état permet de passer dudit état prêt à un état parmi ledit état de sommeil et ledit état de détection en l'absence d'une indication provenant de ladite logique de communications de communications avec un équipement utilisateur actif pendant une troisième période prédéterminée.

12. Petite station de base de cellules selon l'une quelconque des revendications 6 à 11, dans laquelle ladite logique de commande d'état permet de fournir une indication à un coeur de réseau représentatif de chaque transition d'état.

13. Procédé de petite station de base de cellules, comprenant les étapes suivantes :
détecter (sel00) une présence d'un équipement utilisateur actif (44) : et
en l'absence d'une indication de ladite présence d'un équipement utilisateur actif, passer (5110) à un état de sommeil ; et
en réponse à un message de réveil, passer (S80) dudit état de sommeil à au moins un état de non-sommeil, dans lequel l'étape de détection comprend la détection d'une présence d'un équipement utilisateur actif dans un voisinage de la petite station de base de cellules au moyen d'une logique de détection et l'au moins un état de non-sommeil comprend un état de détection dans lequel ladite logique de détection est alimentée.
